# EUROPÄISCHE PATENTSCHRIFT

(11) **EP 0 886 773 B1**
(45) Veröffentlichungstag und Bekanntmachung des Hinweises auf die Patenterteilung: **13.10.2004**
(21) Anmeldenummer: 97919270.5
(22) Anmeldetag: 12.03.1997
(51) Int. Cl.: G01N 27/12, G01N 33/543

(54) **DETEKTION VON MOLEKÜLEN UND MOLEKÜLKOMPLEXEN**
DETECTION OF MOLECULES AND MOLECULE COMPLEXES
DETECTION DE MOLECULES ET COMPLEXES MOLECULAIRES

(30) Priorität: 14.03.1996 DE 19610115
(43) Veröffentlichungstag der Anmeldung: 30.12.1998
(73) Patentinhaber: Fraunhofer-Gesellschaft zur Förderung der angewandten Forschung e.V., 80686 München (DE)
(72) Erfinder: HINTSCHE, Rainer, D-13127 Berlin (DE); PAESCHKE, Manfred, D-16352 Basdorf (DE)
(74) Vertreter: Olgemöller, Luitgard, Dr.
(86) Internationale Anmeldenummer: PCT/DE1997/000494
(87) Internationale Veröffentlichungsnummer: WO 1997/034140

(56) Entgegenhaltungen:
- EP-A- 0 299 780
- WO-A-94/29708
- DE-A- 3 228 542
- US-A- 5 491 097
- SENSORS AND ACTUATORS B, Bd. B28, Nr. 2, 1.August 1995, Seiten 85-94, XP000539269 KNICHEL M ET AL: "UTILIZATION OF A SELF-ASSEMBLED PEPTIDE MONOLAYER FOR AN IMPEDIMETRIC IMMUNOSENSOR"
- NTT REVIEW, Bd. 8, Nr. 2, März 1996, JAPAN, Seiten 77-80, XP002035202 MORITA M. NIWA O: "Electrochemical Detection using Interdigitated Array Carbon Microelectrodes"

## Beschreibung

Die Erfindung betrifft ein Verfahren zum Detektieren von molekularen Spezies sowie einen elektrischen Sensor hierfür. Solche elektrischen Sensoren, auch Ultra-Mikroelektrodenarrays genannt, sind für die chemische Analytik und Prozeßkontrolle auf verschiedenen Gebieten wie Gesundheitswesen, Biotechnologie, Umweltschutz und chemischer Industrie einsetzbar. Sie stellen ein vergleichsweise einfaches Meßsystem dar, das die Bindung oder Anlagerung von Molekülen im elektrodennahen Raum meßbar erfaßt.

Bisher bekannt sind optische Sensoren, die unter anderem nach dem Prinzip der **Evanescent-Wave** [vgl. Feldman, et al., Biosens. & Bioelectron., 10 (1995) 423] oder der **Lichtreflexion** [vgl. Domenici et al., Biosen. & Bioelectron., 10 (1995) 371 oder Brecht, Gauglitz, Biosen. & Bioelectron., 10 (1995), 923] oder der **Surface Plasmon Resonanz** [vgl. Häuseling et al., Langmuir, 7 (1991) 1837 oder U.Jönsson et al., BioTechniques 11 (1991), 620] Bindungseffekte oder die Anlagerung von Molekülen in dünnen Schichten nachzuweisen gestatten.

Für die direkte elektrische Auslesung solcher Bindungsereignisse wurden bereits ein potentiometrisches Meßverfahren [vgl. Bergveld, Biosen. & Bioelectron., 6 (1991), 55], ein kapazitives Meßverfahren [vgl. Swietlow, Electroanalysis, 4 (1992), 921] und ein impedimetrisches Meßverfahren [vgl. Knichel et al. Sens.&Act. B 28, (1995), 85] beschrieben. Auch Elektrodenanordnungen nach dem EIS-Prinzip (EIS: Elektrolyt-Insulator-Semiconductor) wurden vorgeschlagen [vgl. Schyberg et al. Sens.&Act. B 26-27 (1995) 457 oder Souteyrand et al. Sens.&Act. B 20, (1994) 63], wobei der Isolator als Kopplungsund Übertragungselement wirkt.

Bei diesen elektrochemischen Meßanordnungen dienen räumlich weit voneinander entfernte Elektroden zur Erfassung von Molekülen in der elektrodennahen dünnen Grenzschicht, die aber durch eine vergleichsweise große Menge an Elektrolyten und anderen Substanzen zwischen den Elektroden in vielfacher Weise negativ beeinflußt werden.

Es wurden auch Anwendungen bekannt, bei denen dünne Molekülschichten als Gate zwischen Drain und Source von Transistoren abgeschieden wurden und Informationen über die organische Schicht liefern [vgl. Kruse et al. Sens.&Act. B 6 (1992), 101 oder Uhe et al. Electroanalysis, 6(7) (1994), 543].

Allen diesen beschriebenen elektrischen Verfahren mit Elektroden ist gemeinsam, daß sie keine Anordnungen aufweisen, die molekularen Dimensionen nahekommen; in allen diesen Anwendungen sind die sensortypischen Abmessungen, z.B. zwischen Meß-, Referenz- und Arbeitselektroden, um Größenordnungen von den molekularen Dimensionen entfernt.

EP-A-0299780 offenbart ein Verfahren zum Detektieren von Gas oder Dampfmolekülen unter Verwendung einer Elektrodenanordnung im Mikrobereich.

Der Erfindung liegt **die Aufgabe zugrunde,** ein Verfahren mit Hilfe eines elektrischen Sensors vorzuschlagen, das die Detektion von Molekülen und Molekülkomplexen in einem Verdünnungs- oder Lösungsmittel mit höherer Nachweisempfindlichkeit bei vergleichsweise geringerem Systemaufwand ermöglicht.

Die erfindungsgemäße Lösung dieser Aufgabe ist in Anspruch 1 umschrieben. Die weiteren Ansprüche zeigen bevorzugte Ausgestaltungen auf.

Erfindungsgemäß wird das Verfahren zur Detektion von Molekülen und Molekülkomplexen mit einer Anordnung durchgeführt, die Ultramikroelektrodenarrays aufweist, deren Elektrodenstrukturen so eng beieinander angeordnet werden, daß sie der Größe großer Molekülkomplexe, z. B. von Immunoproteinen oder DNS-Molekülen, nahekommen. Benutzt wird insbesondere der Effekt, daß sich zwischen nahe benachbarten Elektroden elektrische Wechselfelder erzeugen lassen und der resultierende Strom hauptsächlich von den detektierten Molekülen und Molekülkomplexen im elektrodennahen Raum beeinflußt wird. Die Form und Feinstruktur der Elektroden ist dabei relativ frei wählbar, während die minimale Entfernung der Elektroden selbst typischerweise 3 µm, bevorzugt 1 µm unterschreiten sollte.

Die Beeinflussung kann durch Diffusion, durch Anlagerung oder Bindung der zu messenden Spezies erfolgen. Durch diese Art der Felderzeugung und Messung mit Hilfe insbesondere der Impedanzspektroskopie erreicht man erfindungsgemäß, daß Elektrolyt-Moleküle sowie andere Substanzen in einer Meßprobe das zwischen den Elektroden anliegende elektrische Feld nur geringfügig beeinflussen und somit die Messung nicht stören.

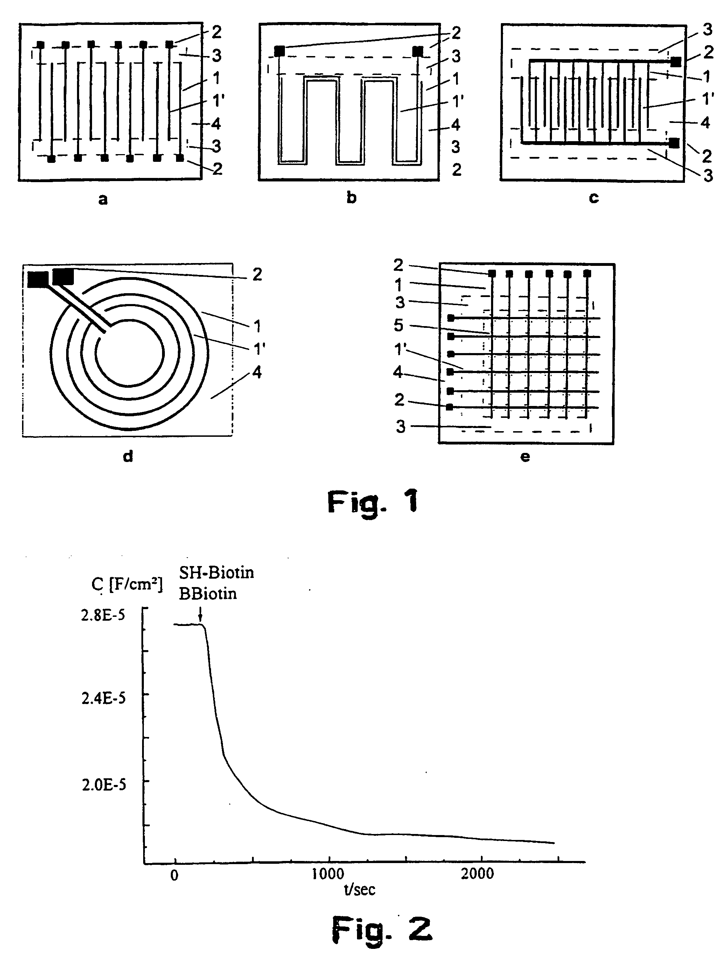

Eine mehrfache Anordnung dieser Art feinstrukturierter Ultra-Mikroelektrodenarrays führt in vorteilhafter Weise zur Verstärkung des eben beschriebenen Effekts, in dem mit geeigneter Meßtechnik, (z. B. Impedanzmeßbrücken) sequentiell oder parallel gleichartige Messungen realisiert werden. Die Ultramikroelektrodenarrays können aus dünnen Schichten von Edelmetallen wie Gold, Platin oder Iridium oder auch Kohlenstoffmaterialien bestehen oder diese Materialien enthalten (Anspruch 16). Sie werden besonders vorteilhaft auf planare isolierende Trägermaterialien wie Siliziumverbindungen, Glas, Keramik oder organische Polymere aufgebracht, können aber auch zur Planarisierung und mechanischen Stützung in diese Materialien eingegraben oder eingelegt sein (Anspruch 17). Die optimale Annäherung zweier voneinander isolierter Ultramikroelektroden läßt sich, wie in Fig. 1 dargestellt, z.B. durch Bänder oder parallele'Streifen oder mäanderförmige und runde oder schneckenartige Strukturen wie auch durch fingerartige Interdigitalanordnungen in Abständen von bevorzugt <1 µm erreichen. In Fig. 1 sind dazu Anordnungsbeispiele a bis d ausgeführt (siehe unten). Die Elektroden sind zum Meßraum hin nicht abgedeckt.

Als eine besondere Ausgestaltung der Anordnung der Ultramikroelektrodenarrays kann vorgesehen sein, daß man ein Elektrodenarray mit einem zweiten oder mehreren überlagert und die Kreuzungspunkte durch Isolationsschichten voneinander isoliert (Anspruch 19). Auf diese Weise können Elektroden in Abständen von nur noch wenigen nm voneinander angeordnet werden, wobei die Isolationsschicht die minimale Entfernung definiert (Fig. 1e). Allen Anordnungen der Ultra-Mikroelektrodenarrays gemeinsam ist, daß sie gut voneinander isoliert sein müssen, damit zwei, drei oder noch mehr Ultramikroelektrodenarrays durch isolierte Zuleitung auf dem Chip elektrisch unabhängig einzeln oder in Gruppen mit Gleich- und/oder Wechselstrom beaufschlagt werden können (Anspruch 20). Die für die Isolierung eingesetzten Werkstoffe (z.B.Kunststoffe oder anorganische Verbindungen wie Siliciumoxide, -nitride und keramische Materialien) müssen über den Nutzungszeitraum inert gegenüber den in der Probe verwendeten Verdünnungs- oder Lösungsmitteln (häufig Wasser) sein. Unter "Lösungsmittel" sind Reaktionsflüssigkeiten zu verstehen, in denen eine Molekülbindung, eine -anlagerung oder eine -diffusion möglich ist. Die Meßprobe muß jedoch nicht zwingend flüssig sein, auch andere Zustände sind möglich. So können die zu messenden Vorgänge auch in einem Gel ablaufen.

Zwischen den Ultramikroelektroden kann das zur Detektion benutzte elektrische Feld durch Wechselstrom mit Frequenzen zwischen 1 mHz und 10 MHz und Amplituden zwischen ca. 10 mV und 50 mV erzeugt werden. Dabei werden Potentiale zwischen 0 V und +/-5 V gewählt.

Das vorliegende Verfahren ermöglicht die Erfassung auch komplexer Reaktionsabläufe und bietet daher erweiterte Einsatzmöglichkeiten. Das Eindringen von Molekülen in den elektrodennahen Bereich mit dem aufgebauten Feld (z.B. durch Diffusion) oder die Anordnung von Molekülen in diesem Bereich, die z.B. durch sog. "self assembling" oder auch durch Komplexbildung geschehen kann, verändern sowohl die realen als auch die imaginären Größen der komplexen Impedanz und können zeitunabhängig - z.B. nach Abschluß der Ereignisse -, bei Bedarf ebenso wie der Phasenwinkel aber auch zeitabhängig, d. h. vom Fortgang des Bindungsereignisses oder der Diffusion abhängig, gemessen werden (Ansprüche 3 und 4). Für ein komplettes Impedanzspektrum wird der gesamte Frequenzbereich vermessen und ausgewertet. Besonders vorteilhaft ist die erfindungsgemäße Nutzung nur einzelner ausgewählter Frequenzen oder Frequenzbereiche, die maximal beeinflußt werden. Dadurch gelingt es, miniaturisierte Nachweissysteme zu konstruieren.

Bei der Nutzung der Ultramikroelektrodenarrays in Flüssigkeiten oder dergleichen ist es auch möglich, zusätzlich zum Meßvorgang - oder aber in Meßpausen - Gleichstromanteile zu überlagern oder zu applizieren (Anspruch 6). Diese können z.B. elektrochemische Reaktionen wie Oxidationen oder Reduktionen von elektrisch aktiven Molekülen induzieren, wobei solche Vorgänge simultan oder sequentiell mit den Impendanzmessungen gemessen werden (Anspruch 7). Erfindungsgemäß ist dadurch eine Kombination elektrischer und elektrochemischer Messungen mit derselben Sensor-Anordnung (Ultramikroelektrodenarray) möglich.

Erfindungsgemäß kann das Verfahren zur Detektion von Molekülen und Molekülkomplexen ausgeführt werden, indem man die Moleküle, die man messen will, auf den Mikroelektrodenflächen selbst bindet. Diese Bindung kann eine physikalische (Adsorption) oder eine chemische sein. Für letztere eignen sich besonders gut die bekannten Verfahren der Selbstanordnung (englisch "self assembling" genannt), die es gestatten, z. B. monomolekulare Thiolverbindungen auf Goldelektroden zu binden und zu messen. Dieses Verfahren ist universell für eine große Zahl von Molekülen anwendbar, nicht nur für solche, die eine Thiolgruppe besitzen oder damit versehen werden können.

Ein zweites selektives Verfahren zur Anheftung von Molekülen oder Molekülkomplexen an die leitenden Mikroelektroden-Oberflächen ist die bekannte Methode der Elektropolymerisation (Anspruch 9). Dabei kann jede Elektrode individuell, in Gruppen oder parallel auf ihrer Oberfläche mit Elektropolymeren, z. B. aus den monomeren Molekülen Streptavidin, Pyrrol, Anilin, Vinylferrocen oder anderen elektrisch polymerisierbaren Substanzen, modifiziert werden. Die Bindung solcher Verbindungen in monomolekularen oder multimolekularen Schichten auf den Elektroden verändert das Impedanzspektrum oder einzelne Frequenzen in sehr charakteristischer Weise und läßt sich damit zeitabhängig oder nach Abschluß der Reaktion messen.

Weiterhin läßt sich das Impedanzspektrum auch dadurch meßbar verändern, daß man die Moleküle anstatt auf den Elektroden in den Elektrodenzwischenräumen positioniert (Anspruch 10). Diese Positionierung kann zum Beispiel durch chemische Bindungen (so z.B. an Siliciumdioxid) oder durch Adhäsion oder durch Reaktionen wie Kondensationsreaktionen, z.B. Silanisierungen, erfolgen. Zur Beschichtung der Gesamtflächen des Elektrodenarrays, also der Elektroden selbst wie auch der Elektrodenzwischenräume, kann man das bekannte Langmuir-Blodget Verfahren heranziehen (Tachibana Matsumoto, Advanced Materials Ab. 11 (1993), 5/796-803), mit dem z. B. Lipide oder Phthalocyanine durch Aufziehen von monomolekularen Filmen in Schichten angeordnet werden können.

Einer weiteren Variante des erfindungsgemäßen Verfahrens zur Detektion von Molekülen und Komplexen gemäß kann die Konzentration von Molekülen in der elektrodennahen Schicht durch Diffusion verändert und die Änderung gemessen werden. Dies läßt sich sowohl mit Hilfe chemisch/physikalisch bedingter Konzentrationsänderungen als auch durch das Anlegen eines elektrischen Potentials, das einen Diffusionsgradienten erzeugt, erreichen. Weiterhin ist es möglich, die Produktion spezifischer Moleküle, beispielsweise durch Enzyme, in Elektrodennähe zu bewirken und zu messen.

Erfindungsgemäß umfaßt das Verfahren zur Detektion von Molekülen und Molekülkomplexen in einer bevorzugten Ausgestaltung die Maßnahme, daß die zuvor auf den Elektrodenarrays erzeugten Molekül-Schichten mit chemischen Haftgruppen versehen sind oder werden, die durch eine chemische Reaktion oder eine Komplexbildung weitere Moleküle binden können (Anspruch 11). Es gelingt dabei, mit hoher Empfindlichkeit derartige Bindungsereignisse zu verfolgen. Wenn beispielsweise ein niedermolekularer Komplexbildner wie Biotin über eine Thiolfunktion an die Elektrode gebunden wird, kann dieser ausschließend mit einem höhermolekularen Komplexbildungspartner, z.B. Streptavidin, an welches beliebige weitere Moleküle gebunden sein können, komplexiert werden.

Eine besonders wichtige und sehr breit einsetzbare Anwendung des vorliegenden Verfahrens ist die Immunodetektion (Anspruch 12). Dabei wird der Aufbau von Molekülschichten auf dem Ultramikroelektrodenarray nach dem Sandwich-Prinzip einer Antikörper/Antigen-Immunoreaktion vorgenommen. Zum Nachweis von Antikörpern in der Meßprobe kann man dafür beispielsweise Haptene (niedermolekulare Antigene) oder andere Antigene (häufig Proteine) an die Mikroelektrodenarrays binden. Durch die spezifische Komplexbildung zwischen den fest verankerten Antigenen und den in der Meßprobe befindlichen Antikörpern gelingt auf diese Weise ein spezifischer Antikörpernachweis. In Umkehrung dieses Prinzips kann man auch die Antikörper auf den Elektroden binden und Haptene oder dergleichen aus der Meßprobe detektieren. Das Antigen kann auch ein höhermolekulares Virus-Protein sein, das am Mikroelektrodenarray fest gebunden ist und Antikörper aus der Meßprobe zu messen gestattet. Varianten dieses Verfahrens sind der Einsatz von multivalenten Antikörpern, mit denen drei- oder mehrfache Molekülkomplexe konstruiert und gemessen werden können.

Eine weitere Ausgestaltung des erfindungsgemäßen Verfahrens ist dadurch gegeben, daß man das Ultramikroelektrodenarray zur elektrischen Auslesung von Hybridisierungsvorgängen in der Nucleinsäurechemie einsetzt (Anspruch 13). Applikationen in der Gentechnologie lassen sich dann dadurch realisieren, daß man Nucleotide über Thiolbindungen oder dgl. an die Elektrodenstrukturen koppelt und die Bindung komplementärer Nucleinsäure-Bausteine durch das erfindungsgemäße Verfahren erfaßt. Diese Detektion läßt sich dadurch variieren, daß man zusätzliche Anlagerungen von Nucleinsäuren, z. B. zur Triple-DNS oder die zusätzliche Einlagerung komplexierender Moleküle in Doppel- oder Triple-Helices als Bindungsereignis einer Messung zugänglich macht (Anspruch 14). Für diese Komplexierung oder Einlagerung können vorteilhafterweise auch Metallkomplexe genutzt werden, die das elektrodennahe Feld elektrisch besonders intensiv verändern.

Das Meßprinzip und die Veränderung des elektrischen Feldes gestattet es prinzipiell, die Molekülstruktur und -art mittels einer quantitativen Analyse des Impedanzspektrums zu unterscheiden. Eine Differenzierung nach der Art und Größe der Moleküle ist durch die quantitative Auswertung und insbesondere durch die Eichung der Impedanzspektren mit bekannten Molekülspezies möglich.

Die Erfindung wird nachfolgend anhand mehrerer Figuren und einem **Beispiel** erläutert.
- **Figur 1**: zeigt mögliche Anordnungen der Ultramikroelektrodenarrays;
- **Figur 2**: zeigt die Adsorption von SH-Biotin;
- **Figur 3**: zeigt Nyquist-Plots einer mit SH-Biotin modifizierten und einer zusätzlich mit Streptavidin komplexierten Elektrode;
- **Figur 4**: zeigt den amperometrischen Nachweis von p-Aminophenol.

Figur 1 zeigt verschiedene mögliche Anordnungen von Ultramikroelektrodenarrays. Dabei ist
- 1a: eine streifenförmige parallele Anordnung;
- 1b: eine mäanderförmige parallele Anrodnung;
- 1c: eine fingerartige interdigitale Anordnung;
- 1d: eine kreisförmige parallele Anordnung;
- 1e: eine kreuzförmig gestapelte und voneinander isolierte Anordnung;

Der Anordnung der Figur 1d sehr ähnlich ist die Anordnung der Elektroden als parallel verlaufende Schnecke.

Die voneinander isolierten Ultramikroelektroden 1 und 1' mit ihren Kontakten zur elektrischen Verbindung 2 sowie den Isolationsschichten (z.B. Siliciumnitrid) 3 auf dem Chip sind auf einem planaren Träger (z.B. ein Siliciumchip) 4 angeordnet. Bei der mehrlagigen Anordnung der Figur 1e wird durch eine Zwischenisolierung 5 die Elektrodenebene 1 von der Elektrodenebene 1' isoliert.

### Ausführungsbeispiel

Ein interdigitales Goldelektrodenarray, strukturiert nach **Figur 1c,** besitzt eine Elektrodenbreite von 1 µm und einen Elektrodenabstand von 0.7 µm. Die Elektroden werden mit einer 1 ml, 10 mmol/l SH-Biotin-Lösung mittels Self Assembling modifiziert.

In **Figur 2** ist die Adsorption von 10 mmol/l SH-Biotin in einer 0.1 mol/l Natriumpufferlösung als Kapazitäts-Zeit-Verhalten bei einem angelegten Potential von 50 mV und einer zusätzlich aufgeprägten Amplitude von 10 mV an einem Paar interdigitaler Goldelektroden dargestellt. Die Kapazität der Elektrode erniedrigt sich nach einer Zugabe von SH-Biotin in die Lösung. Nach ca. 2000 Sekunden ist die Goldoberfläche vollständig mit - S-Biotin bedeckt. Nach 10 min. Waschen der Elektrode in 0.1 mol/l Natriumpufferlösung wird in einem nachfolgenden Schritt die adsorbierte monomolekulare Molekülschicht mit Streptavidin durch Eintauchen der modifizierten Elektrode für 2 Stunden in eine 50 U/ml Lösung komplexiert. Nach der β-Galactosidase-Streptavidin Modifizierung wurde die Elektrode 10 min in 0.1 mol/l Natriumpufferlösung gespült und anschließend in eine Meßzelle gespannt.

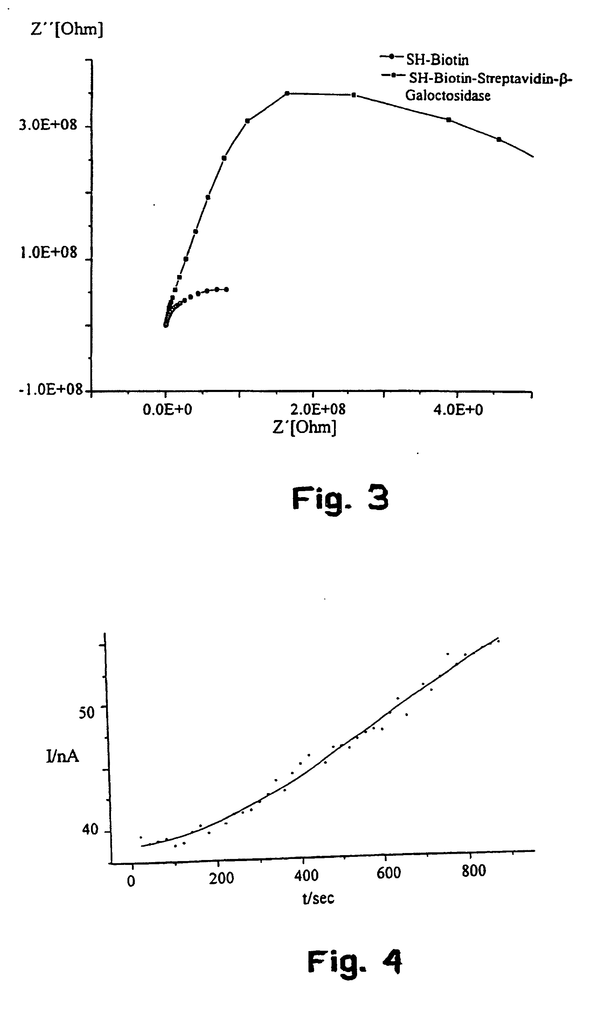

**Figur 3** zeigt sogenannte Nyquist-Plots bei einem Potential von 50 mV, einer Amplitude von 10 mV und einem Frequenzbereich zwischen 2x10⁻³ Hz und 1x10⁶ Hz, gemessen als Zweipol-Impedanz. Kurve I repräsentiert die mit SH-Biotin modifizierte Elektrode, Kurve II die gleiche Elektrode nach zusätzlicher Komplexierung des SH-Biotin mit β-Galactosidase-Streptavidin. Die Änderung der Impedanz zeigt die Störung des Dielektrikums zwischen den Elektroden durch das komplexierte Molekül und repräsentiert außerdem eine vollzogene Bindung zwischen dem Biotin und dem Streptavidin-Enzym-Komplex.

Das Enzym β-Galactosidase am Streptavidin wird unabhängig als kombinierter amperometrischer Nachweis der Bindung des β-Galactosidase-Streptavidins an das SH-Biotin genutzt. Dieser Nachweis wird mit der Funktion der β-Galactosidase, der enzymatischen Umsetzung von 5 mmol/l p-Aminophenyl-β-D-Galactopyranoside (p-APG) zu p-Aminophenol, über eine amperometrische Oxidation-Reduktion des p-Aminophenols durchgeführt.

**Figur 4** zeigt den amperometrischen Nachweis von p-Aminophenol an den gleichen Elektroden mit einem Oxidationspotential von 250 mV und einem Reduktionspotential von -50 mV gegen eine Ag/AgCl-Referenzelektrode, nach Zugabe von 5 mmol/l p-APG in 0.1 mol/l Natriumpufferlösung in die Meßzelle. Die kontinuierliche Umsetzung von p-APG zu p-Aminophenol, welches durch den linearen Anstieg des Stromes repräsentiert wird, zeigt an, daß das Enzym die p-Aminophenolkonzentration in der Meßkammer erhöht.

## Patentansprüche

1. Verfahren zum Detektieren von Molekülen oder Molekülkomplexen in einem Verdünnungs- oder Lösungsmittel, wobei
- eine Meßprobe mit einer Ultra-Mikroelektrodenanordnung in Kontakt gebracht wird, welche mindestens zwei Elektrodenstrukturen aufweist, die auf einem isolierenden Trägermaterial aufgebracht oder darin eingelegt sind und die zum Meßraum hin nicht abgedeckt und derartig zueinander angeordnet sind, daß die Abstände zwischen den verschiedenen Strukturen im Ultra-Mikrobereich liegen,
- durch Anlegen eines elektrischen Potentials an die Elektrodenstrukturen ein elektrisches Wechselfeld erzeugt wird und
- die Strom- oder Potentialveränderungen gemessen werden, die durch in der Meßprobe vorhandene oder entstehende Spezies verursacht werden.

2. Verfahren nach Anspruch 1, worin die Feldveränderungen mit Hilfe der Impedanzspektroskopie gemessen werden.

3. Verfahren nach Anspruch 1 oder 2, worin die Verstimmung des elektrischen Feldes, die durch in der Meßprobe vorhandene oder entstehende Spezies entsteht, durch die Messung der kapazitiven und/oder der resistiven Anteile und/oder des Phasenwinkels zeitunabhängig oder zeitabhängig gemessen wird.

4. Verfahren nach einem der Ansprüche 1 bis 3, worin die Detektion der Moleküle oder Molekülkomplexe anhand ihrer Bindung oder Anlagerung oder Diffusion erfolgt.

5. Verfahren nach einem der Ansprüche 1 bis 4, wobei mehrere Elektrodenanordnungen überlagert angeordnet und die Kreuzungspunkte durch Isolationsschichten voneinander isoliert sind und die Messung sequentiell, parallel oder simultan erfolgt.

6. Verfahren nach einem der Ansprüche 1 bis 5, **dadurch gekennzeichnet, daß** das elektrische Wechselfeld mit einem Gleichstromanteil überlagert oder angeregt wird.

7. Verfahren nach Anspruch 6, wobei in der Meßprobe amperometrische Oxidationen oder Reduktionen oder Redox-Recycling von Molekülen mit elektrisch aktiven Gruppen oder von Redox-Mediatoren gemessen werden.

8. Verfahren nach einem der Ansprüche 1 bis 7, worin zu messende Spezies sich auf den aktiven Elektrodenflächen selbst anordnen und in gebundenem Zustand gemessen werden.

9. Verfahren nach einem der Ansprüche 1 bis 8, worin Moleküle auf den Elektrodenflächen durch Elektropolymerisation gebunden und in gebundenem Zustand gemessen werden.

10. Verfahren nach einem der Ansprüche 1 bis 9, wobei Moleküle in den Elektrodenzwischenräumen und/oder auf der Gesamtoberfläche der Elektroden durch physikalische oder chemische Bindung fixiert und gemessen werden.

11. Verfahren nach einem der Ansprüche 8 bis 10 wbei eine erste fixierte Molekülschicht eine Haftgruppe enthält, die selbst oder durch ein bifunktionelles Reagenz eine zweite Molekülschicht und diese gegebenenfalls weitere bindet und diese Ereignisse oder ihre Umkehr gemessen werden.

12. Verfahren nach Anspruch 11, worin die erste Molekülschicht komplexbindende Gruppen enthält, die ihren komplementären Bindungspartner binden, wobei diese Ereignisse oder ihre Umkehr gemessen werden.

13. Verfahren nach Anspruch 11 oder 12, worin die erste Molekülschicht ein Desoxyribonukleinsäure- oder ein Ribonukleinsäurebaustein ist, der durch Hybridisierung einen komplementären Molekülstrang bindet, wobei dieses Ereignis oder seine Umkehr gemessen werden.

14. Verfahren nach Anspruch 13, worin die Molekülanordnung einen weiteren Nucleinsäurebaustein oder ein komplexierendes oder einlagerndes Molekül bindet und dieses Ereignis oder seine Umkehr gemessen wird.

15. Verfahren nach einem der Ansprüche 1 bis 14, worin die Moleküle oder Molekülkomplexe detektiert werden, indem sie nach Größe und/oder Art unterschieden werden.

16. Verfahren nach einem der Ansprüche 1 bis 15, worin die aktiven Elektrodenflächen aus Gold, Platin, Iridium oder anderen Edelmetallen, aus Kohlenstoffmaterialien oder aus anderen leitenden Materialien oder aus Kombinationen hieraus bestehen.

17. Verfahren nach einem der Ansprüche 1 bis 16, worin das isolierende Trägermaterial ausgewählt ist unter Siliciumverbindungen, Glas, Keramik oder organischen Polymeren.

18. Verfahren nach einem der Ansprüche 1 bis 17, worin die Elektroden durch Beschichtung auf einem Substrat oder Einbettung in ein solches als Bänder oder Streifen oder kreisförmige Strukturen oder interdigitale Anordnungen im Mikrometer- oder Submikrometerabstand zueinander angeordnet sind.

19. Verfahren nach einem der Ansprüche 1 bis 18, worin die Elektroden zumindest teilweise als mehrlagige und voneinander isolierte und ggf. sich kreuzende Strukturen angeordnet sind.

20. Verfahren nach einem der Ansprüche 1 bis 19, worin die aktiven Elektrodenflächen über isolierte Zuleitungen und/oder elektronische Komponenten einzeln oder in Gruppen mit Gleich- und/oder Wechselstrom beaufschlagt werden können.

## Claims

1. Process for detecting molecules or molecule complexes in a diluent or solvent, wherein
- a test sample is brought into contact with an ultra-microelectrode arrangement which has at least two electrode structures which are applied to an insulating support material or laid therein and which are not covered towards the test chamber and are arranged with respect to one another such that the distances between the various structures lie in the ultra-micro range,
- by applying an electrical potential to the electrode structures, an alternating electric field is produced and
- the current or potential changes are measured which are caused by species present or being produced in the test sample.

2. Process according to claim 1, wherein the field changes are measured with the aid of impedance spectroscopy.

3. Process according to claim 1 or 2, wherein detuning of the electric field, which is produced by species present or being produced in the test sample, is measured independently of time or as a function of time by measuring the capacitive and/or the resistive components and/or the phase angle.

4. Process according to one of claims 1 to 3, wherein detection of the molecules or molecule complexes takes place using binding or attachment or diffusion thereof.

5. Process according to one of claims 1 to 4, wherein several electrode arrangements are arranged superimposed and the points of intersection are insulated from one another by insulation layers and measurement is effected sequentially, in parallel or simultaneously.

6. Process according to one of claims 1 to 5, **characterised in that** the alternating electric field is superimposed or stimulated by a direct current component.

7. Process according to claim 6, wherein amperometric oxidations or reductions or redox recycling of molecules with electrically active groups or of redox mediators are measured in the test sample.

8. Process according to one of claims 1 to 7, wherein species to be measured are arranged on the active electrode surfaces themselves and are measured in the bound state.

9. Process according to one of claims 1 to 8, wherein molecules are bound to the electrode surfaces by electropolymerisation and measured in the bound state.

10. Process according to one of claims 1 to 9, wherein molecules are fixed in the electrode gaps and/or on the entire surface of the electrodes by physical or chemical binding and measured.

11. Process according to one of claims 8 to 10, wherein a first fixed molecular layer contains an adhering group, which itself or due to a bifunctional reagent binds a second molecular layer and the latter optionally binds further and these events or their reverse are measured.

12. Process according to claim 11, wherein the first molecular layer contains complex-binding groups which bind to their complementary binding partners, wherein these events or their reverse are measured.

13. Process according to claim 11 or 12, wherein the first molecular layer is a deoxyribonucleic acid or a ribonucleic acid component, which binds a complementary molecular strand by hybridisation, wherein this event or its reverse are measured.

14. Process according to claim 13, wherein the molecular arrangement binds a further nucleic acid component or a complexing or intercalating molecule and this event or its reverse is measured.

15. Process according to one of claims 1 to 14, wherein the molecules or molecule complexes are detected, in that they will differ according to size and/or type.

16. Process according to one of claims 1 to 15, wherein the active electrode surfaces consist of gold, platinum, iridium or other noble metals, of carbon materials or of other conductive materials or of combinations thereof.

17. Process according to one of claims 1 to 16, wherein the insulating support material is selected from silicon compounds, glass, ceramic or organic polymers.

18. Process according to one of claims 1 to 17, wherein the electrodes are arranged with respect to one another at micrometre or submicrometre distance by coating on a substrate or embedding in such a substrate as bands or strips or circular structures or interdigital arrangements.

19. Process according to one of claims 1 to 18, wherein the electrodes are arranged at least partly as multi-layered structures which are insulated from one another and optionally are intersecting.

20. Process according to one of claims 1 to 19, wherein the active electrode surfaces may be exposed to direct current and/or alternating current individually or in groups via insulated supply leads and/or electronic components.

## Revendications

1. Procédé de détection de molécules ou de complexes moléculaires dans un diluant ou un solvant, dans lequel :
- une sonde de mesure est mise en contact avec un système d'électrodes ultramicroscopiques qui présente au moins deux structures d'électrodes qui sont appliquées sur un matériau de support isolant ou y sont introduites, ne sont pas recouvertes vers l'espace de mesure et sont ménagées l'une par rapport à l'autre de sorte que les espacements entre les diverses structures se situent dans la plage ultramicroscopique,
- un champ électrique alternatif est produit par application d'un potentiel électrique sur les structures d'électrodes et
- on mesure les variations de courant ou de potentiel qui sont provoquées par des espèces présentes ou produites dans la sonde de mesure.

2. Procédé selon la revendication 1, dans lequel les variations de champ sont mesurées par spectroscopie par impédance.

3. Procédé selon la revendication 1 ou 2, dans lequel le désaccord du champ électrique, qui se produit sous l'effet de l'espèce présente ou produite dans la sonde de mesure, est mesuré par mesure des fractions capacitives et/ou résistives et/ou de l'angle de phase indépendamment du temps ou en fonction du temps.

4. Procédé selon l'une quelconque des revendications 1 à 3, dans lequel la détection des molécules ou des complexes moléculaires se fait par leur liaison ou leur fixation ou leur diffusion.

5. Procédé selon l'une quelconque des revendications 1 à 4, dans lequel plusieurs systèmes d'électrodes sont superposés, les points de croisement sont isolés les uns des autres par des couches isolantes et la mesure se fait en séquence, en parallèle ou simultanément.

6. Procédé selon l'une quelconque des revendications 1 à 5, **caractérisé en ce que** le champ électrique alternatif est superposé ou excité avec une fraction de courant continu.

7. Procédé selon la revendication 6, dans lequel, dans la sonde de mesure, les oxydations ou les réductions ou le recyclage redox ampérométriques de molécules sont mesurés par des groupes électriquement actifs ou par des médiateurs redox.

8. Procédé selon l'une quelconque des revendications 1 à 7, dans lequel les espèces à mesurer s'agencent sur les surfaces d'électrodes actives et sont mesurées à l'état lié.

9. Procédé selon l'une quelconque des revendications 1 à 8, dans lequel les molécules sur les surfaces d'électrodes sont liées par électropolymérisation et sont mesurées à l'état lié.

10. Procédé selon l'une quelconque des revendications 1 à 9, dans lequel les molécules dans les espaces intermédiaires des électrodes et/ou sur toute la surface des électrodes sont fixées et mesurées par liaison physique ou chimique.

11. Procédé selon l'une quelconque des revendications 1 à 10, dans lequel une première couche moléculaire fixée contient un groupe adhésif, qui lie, lui-même ou via un réactif bifonctionnel, une deuxième couche moléculaire et celle-ci éventuellement d'autres et on mesure ces événements ou leur inversion.

12. Procédé selon la revendication 11, dans lequel la première couche moléculaire contient des groupes complexants qui lient leurs partenaires de liaison complémentaires, et l'on mesure ces événements ou leur inversion.

13. Procédé selon la revendication 11 ou 12, dans lequel la première couche moléculaire est un composant d'acide désoxyribonucléique ou d'acide ribonucléique, qui se lie par hybridation à un brin moléculaire complémentaire, et l'on mesure ces événements ou leur inversion.

14. Procédé selon la revendication 13, dans lequel le système moléculaire se lie à un autre composant d'acide nucléique ou à une molécule complexante ou dispersante et l'on mesure cet événement ou son inversion.

15. Procédé selon l'une quelconque des revendications 1 à 14, dans lequel les molécules ou les complexes moléculaires sont détectés en les différenciant en fonction de leur grandeur et/ou de leur type.

16. Procédé selon l'une quelconque des revendications 1 à 15, dans lequel les surfaces d'électrodes actives sont constituées d'or, de platine, d'iridium ou d'autres métaux nobles, de matériaux carbonés ou d'autres matériaux conducteurs ou de leurs combinaisons.

17. Procédé selon l'une quelconque des revendications 1 à 16, dans lequel le matériau de support isolant est choisi parmi les composés de silicium, le verre, la céramique ou les polymères organiques.

18. Procédé selon l'une quelconque des revendications 1 à 17, dans lequel les électrodes sont aménagées par application sur un substrat ou incorporation à celui-ci sous forme de bandes ou de rubans ou de structures circulaires ou de systèmes interdigitaux à distance les uns des autres dans la plage micrométrique ou sous-micrométrique.

19. Procédé selon l'une quelconque des revendications 1 à 18, dans lequel les électrodes sont aménagées au moins en partie sous la forme de structures stratifiées et isolées l'une de l'autre et qui se croisent éventuellement.

20. Procédé selon l'une quelconque des revendications 1 à 19, dans lequel les surfaces d'électrodes actives peuvent être alimentées par du courant continu et/ou du courant alternatif via des lignes isolées et/ou des composants électroniques, individuellement ou en groupes.
